# EUROPEAN PATENT APPLICATION

(11) **EP 2 022 334 A1**
(43) Date of publication of application: **11.02.2009**
(21) Application number: 06728998.3
(22) Date of filing: 13.03.2006
(51) Int. Cl.: A22C 17/00

(54) **METHOD AND EQUIPMENT FOR REMOVING BACKBONE OF CARCASS**

(71) Applicant: Mayekawa Mfg. Co., Ltd., Koto-ku Tokyo 135-8482 (JP)
(72) Inventor: WATANABE, Toshiaki, Tokyo 135-0046 (JP); MIZUTANI, Jun, Tokyo 135-0046 (JP)
(74) Representative: Strehl Schübel-Hopf & Partner
(86) International application number: PCT/JP2006/304933
(87) International publication number: WO 2007/105299

(57) **Abstract**

The method of automatic removing the backbone of a pair of halved carcasses without injuring meat near the mamillary processes comprises: a step of positioning the halved carcasses(P) suspended with the halved side faces(w) thereof facing each other by inserting from the back side thereof between the two halved carcasses a backbone removing unit (11) having a pair of backbone removing devices each comprising a platy spinous process guide(12), a backbone holder plate(13) having U-shaped recess forming members (131, 132), and a round cutter(14) for cutting the backbone(B1), and bringing the backbone holder plates into contact with the halved side faces(w); a step of fixing the backbones by pinching it with the U-shaped recess forming members (131, 132) and the spinous process guide(12) inserted into the incision(12c) made along the spinous processes to the meat adhering thereto in the preceding process until each spinous process guide abuts the root of each mamillary process (B4), and a step of cutting the backbone(B1) by advancing the rotary round cutter (14) from the rib side at a slant and moving down the backbone removing unit 11.

## Description

### TECHNICAL FIELD

The present invention relates to a method and apparatus to automate a process of removing the backbone of a halved carcass produced by halving the carcass of a fat stock such as a pig, cow, or sheep, thereby enabling substantial increase in processing efficiency of removing the backbone.

### BACKGROUND ART

Conventionally, dissection operation of a slaughtered livestock such as a pig is processed such that, after blood is let out from the slaughtered livestock, the belly is slit up and bowels are taken out, then the eviscerated body of the livestock is severed along the backbone into two halved carcasses. The halved carcass is divided, in case of a pig for example, into three blocks, i.e. a shoulder/arm part, a loin/belly part, and a thigh part. Then each block is deboned.

The inventors proposed an apparatus to automate a process of making incision for cutting the connection of meat to the spinous processes in a halved carcass produced by halving the carcass of a fat stock along the backbone thereof in Japanese Patent Application No. 2005-180057 (patent literature 1), and a cutting blade and a cutting method applicable to said process of making incision in Japanese Patent Application No.2005-180058(patent literature 2).

According to the apparatus proposed in the patent literature 1, the halved carcass is transferred in a pendent state through a station where a position to make incision to cut connection of meat to the spinous processes is detected, and through a station where a cutter is inserted along the spinous processes into the meat adhering thereto to make incision to separate the meat from the spinous processes, and in this way automation of breaking up the connection of meat to the spinous processes was attained.

Patent literature 1: Japanese Patent Application No.2005-180057(not yet publicized).
Patent literature 2: Japanese Patent Application No.2005-180058(not yet publicized).

### DISCLOSURE OF THE INVENTION

### PROBLEMS TO BE SOLVED BY THE INVENTION

However, it is necessary to separate fillet, backbone, and rib bones after the connection of meat to the spinous processes is broken up. As the backbone is intricately configured with spinous processes, mamillary processes, etc. protruding in different directions, removal of backbone has been performed manually conventionally. However, it is difficult to insert a knife near the mamillary process, and skill is demanded to perform removal of backbone in a small amount of time with high yield rate of meat.
Further, meat of high commercial value such as loin exists near the mammilary processes, and there is a fear that the meat of high commercial value near the mammilary processes is injured improperly when the knife is inserted near the mamillary process. This has hampered realization of automation of backbone removing process.

The present invention was made in light of the problems of prior art as mentioned above, and the object of the invention is to enable substantial increase in processing efficiency of removing the backbone of a halved carcass produced by halving the carcass of a fat stock

### MEANS TO SOLVE THE PROBLEMS

To attain the object, the present invention proposes a method of removing halved backbones of a pair of halved carcasses produced by halving a carcass of a fat stock longitudinally through the center of the spinous processes of its backbone, comprising:
a step of positioning the pair of halved carcasses by inserting a backbone removing unit having a pair of backbone removing devices each comprising a platy spinous process guide, a backbone holder plate having U-shaped recess forming members at an end side thereof arranged along the longitudinal direction of the backbone, and a round cutter, between the pair of right and left halved carcasses hanging with their halved side faces facing each other from the back side of the carcasses so that each of the backbone holder plates contacts each of the halved side faces of the halved carcasses,
a step of fixing the pair of halved carcasses by drawing back the backbone holder plates toward the back side while contacting the halved side faces of the halved carcasses so that each of the backbones of the halved carcasses are engaged with each of the U-shaped recesses forming members of the backbone holder plates respectively and inserting each of the spinous process guides into each of incisions made in a preceding pretreatment process along the spinous processes to the meat adhering thereto until each spinous process guide abuts the root of each mamillary process, and
a step of cutting the backbones of the halved carcasses by moving down the backbone removing unit in a state each of the round cutters is inclined by a certain angle to each of the backbone holder plates from the rib bone side so that the cutting edge of each cutter rotated to cut the backbone comes to between the spinous process and the mamillary process of each halved backbone when cutting the backbone.

In the method of the invention, a backbone removing unit is used which has a pair of backbone removing devices each comprising a platy spinous process guide, a backbone holder plate having U-shaped recesses formed at an end side thereof to allow the backbone to be engaged along its longitudinal direction, and a round cutter.
The pair of halved carcasses is positioned by inserting the removing unit between the pair of right and left halved carcasses hanging with their halved side faces facing each other from the back side of the carcasses so that each of the backbone holder plates contacts each of the halved side faces of the halved carcasses. By pushing the carcasses from their outside surfaces with a pair of carcass pushers, the contact between the backbone holder plates and the halved side faces of the carcasses can be made secured. The backbone removing unit is inserted between the halved carcasses until the backbone holder plates protrude into the belly side of the carcasses and then moved back a little so that each of the halved backbones is engaged into the U-shaped recesses of each backbone holder plate. By this, the halved backbone can be easily held by the U-shaped recess forming members of the backbone holder plate.

Then, the backbone holder plates are moved back toward the back side of the carcasses while contact with the halved side faces of the carcasses being kept to allow each halved backbone to be engaged in the U-shaped recesses of each backbone holder plate, and each spinous process guide is inserted into the incision made in the preceding pretreatment process along the spinous processes to the meat adhering thereto until the spinous process guide abuts the root of the mamillary process to fix each halved carcass.
Each of the halved backbones of the halved carcasses fixed in this wise is cut by moving down the backbone removing unit in a state that each of the rotary round cutters is inclined by a certain angle to each backbone holder plate from the rib bone side so that the cutting edge of each cutter rotated to cut the backbone comes between the spinous process and the mamillary process of each halved backbone when cutting the backbone.

By moving down the backbone removing unit in a state the backbone is held by the U-shaped recess forming members, the backbone can be cut while correcting its three dimensionally twisted state to a linear state. By providing a relief cut at the lower end part of the U-shaped recess forming member to allow the bent portion of the backbone bending toward belly side of the halved carcass not to interfere with the recess forming member, the backbone removing unit can be moved down smoothly with the backbone being corrected in its bending without experiencing excessive bending correction force.

By composing such that the backbone removing unit is mounted to a supporting board and both of backbone removing devices are operated concurrently, removing of both the halved backbones of the pair of halved carcasses can be performed concurrently.

When pretreatment process of making incision along the spinous processed to the meat adhering thereto and of removing fillet are performed before backbone removing process is carried out, it is preferable that the pretreatment processes are performed by transferring to stations for performing the pretreatment in a state the pair of halved carcasses is suspended with the halved side faces thereof facing each other and brought to a stop in the stations to make the incision and remove the fillet, and then the pair of halved carcasses is transferred to the backbone removing station equipped with the apparatus (es) of the invention in the hanging state. By this, continuous operation line including pretreatments and the backbone removing process can be easily composed.

The invention proposes an apparatus for removing halved backbones of a pair of halved carcasses produced by halving a carcass of a fat stock longitudinally through the center of the spinous processes of the backbone, comprising: a backbone removing unit having a pair of backbone removing devices each comprising a platy spinous process guide to be inserted into incision made along the spinous processes in a preceding pretreatment process to the meat adhering thereto until the spinous process guide abuts the root of each mamillary process, a backbone holder plate having U-shaped recess forming members at an end side thereof arranged along the longitudinal direction of the backbone, and a rotary round cutter which can advance/draw back along a direction inclined by a certain angle to the backbone holder plate from the rib bone side so that its cutting edge comes between the spinous process and the mamillary process when it is advanced to cut the backbone along the longitudinal direction of the backbone; a drive means which can advance and draw back the backbone removing unit to between the halved carcasses and also can move the unit vertically in a state the unit is inserted between the halved carcasses; and carcass holding members for pushing the halved carcasses from outside surfaces thereof to press each of the halved side faces of the carcasses to each of the backbone holder plates when the backbone removing unit is inserted between the halved carcasses, the carcass holding members being able to be advanced/retreated toward/from the halved carcasses.

The pair of halved carcasses transferred to the backbone removing station equipped with the backbone removing apparatus (es) is brought to a stop in the station and the hanging members and ankles are fixed so that the carcasses are kept stable at the stop position. The transfer means is preferably composed such that a plurality of pairs of halved carcasses hanging from hanger members at an equal spacing with their ankles hooked to the hanger are transferred horizontally, the halved carcasses of each pair being suspended in a state the carcasses are adjacent each other in the transferring direction with the halved side faces of the carcasses facing each other, in such a manner that the halved carcasses are introduced into a backbone removing station provided with the backbone removing apparatus (es) intermittently at a takt time and brought to a stop to perform backbone removing in the station.

Then, the backbone removing unit is inserted between the halved side faces of the pair of carcasses from the back side thereof. The backbone removing unit has a pair of spinous guides, a pair of backbone holder plates, and a pair of round cutters integrated to the unit. When the backbone removing unit is inserted between the halved side faces of the carcasses, the U-shaped recess forming members provided at front end parts of the backbone holder plates protrude from the backbone toward the belly side of the carcasses and the halved side faces of the carcasses contact the backbone holder plates, that is, the halved side faces of the carcasses sandwich the backbone holder plates.

It is preferable that a carcass distance broadening device is provided to be inserted between the halved side faces of the carcasses to broaden the distance before the backbone removing unit is inserted thereinto so that the backbone removing unit can be easily inserted thereinto, the carcass distance broadening device is retreated after the backbone removing unit is inserted, and the halved side faces of the right and left halved carcasses approach each other to come to contact with the backbone holder plates.

Then, the pair of spinous process guides is inserted into the incisions made in the pretreatment process along the spinous processes to the meat adhering thereto while pushing the halved carcasses from outside surfaces thereof with a pair of carcass pushers to press the halved side faces of the carcasses against the backbone holder plates, and at the same time the backbone holder plates are pulled back toward the back side of the carcasses so that the U-shaped recess forming members provided at the front end parts of the backbone holder plates to be arranged along the longitudinal direction of the backbone engage with the halved backbones of the halved carcasses. In this way, the halved backbones are pinched with the spinous process guides and the U-shaped recess forming members of the backbone holder plates from its back side and from its belly side respectively, so the halved carcasses can be securely fixed. In this wise, automation of fixing step of the pair of halved carcasses is made possible.

Then, the rotary round cutters for cutting the backbones are advanced at a slant so that the cutter edge of each cutter comes between the spinous process and the mamillary process when it cut the backbone and in this state the backbone removing unit is moved down. As the belly side of the backbone is engaged in the U-shaped recesses of the backbone holder plate, the bent portion of the backbone bending toward the belly side can be corrected as the recesses move down linearly as the backbone holder plate moves down. It is preferable to provide a relief cut at the lower end part of the U-shaped recess forming member to allow the bent portion of the backbone bending toward belly side of the halved carcass not to interfere with the recess forming member. By this, the backbone removing unit can be moved down smoothly with the backbone being corrected in its bending without experiencing excessive bending correction force.

### EFFECT OF THE INVENTION

According to the invention, by constituting the method of removing backbones from a pair of halved carcasses to comprise a step of positioning the pair of halved carcasses by inserting a backbone removing unit between the pair of right and left halved carcasses hanging with their halved side faces facing each other so that each of the backbone holder plates contacts each of the halved side faces, a step of fixing the pair of halved carcasses by drawing back the backbone holder plates toward the back side while contacting the halved side faces so that each of the backbones engaged with each of the U-shaped recesses forming members of the backbone holder plates respectively and inserting each of the spinous process guides into each of incisions made in a preceding pretreatment along the spinous processes to the meat adhering thereto until each spinous process guide abuts the root of each mamillary process, and a step of cutting the backbones by moving down the backbone removing unit in a state each of the round cutters is inclined by a certain angle to each of the backbone holder plates from the rib bone side so that the cutting edge of each cutter comes to between the spinous process and the mamillary process of each halved backbone when cutting the backbone, with the bending portion of each backbone bending toward the belly side being corrected with the U-shaped recess forming members as the backbone removing unit moves down, positioning, fixing, and backbone cutting processes can be automated, and processing efficiency is increased to a large extent in comparison with manual processing.

Further, as the backbone is cut by advancing the cutter so that the cutter edge comes between the spinous process and the mamillary process when it cut the backbone, there is no fear of injuring high quality meat near the mamillary process.
It is preferable to provide a relief cut at the lower end part of the U-shaped recess forming member to allow the bent portion of the backbone bending toward belly side of the halved carcass not to interfere with the recess forming member. By this, the backbone removing unit can move down smoothly with the backbone being corrected in its bending without experiencing excessive bending correction force, and the backbone can be cut so that the round cutter comes exactly to between the spinous process and the mamillary process when cutting the backbone.

According to the invention, the apparatus is provided with a backbone removing unit having a pair of backbone removing devices each comprising a platy spinous process guide, a backbone holder plate, and a rotary round cutter; a drive means which can advance and draw back the backbone removing unit between the halved carcasses and also can move the unit vertically in a state the unit is inserted between the halved carcasses; and carcass holding members for pushing the halved carcasses from outside surfaces thereof to press each of the halved side faces of the carcasses to each of the backbone holder plates when the backbone removing unit is inserted between the halved carcasses, the carcass holding members being able to be advanced/retreated toward/from the halved carcasses; and by inserting the backbone removing unit between the halved side faces of the pair of carcasses and positioning the carcasses with the backbone holder plates, then pinching the halved backbone securely with the spinous process guide and the U-shaped recess forming members of the backbone holder plate, and moving down the backbone removing unit to cut the backbone with the round cutter along the longitudinal direction thereof, backbone removing process can be automated and processing efficiency can be increased to a large degree in comparison with manual processing.

As the backbones of the halved carcasses are cut by moving down the backbone removing unit in a state each of the round cutters is inclined by a certain angle to each of the backbone holder plates from the rib bone side so that the cutting edge comes to between the spinous process and the mamillary process of each halved backbone when cutting the backbone, the backbone can be cut with high accuracy to remove the backbone together with spinous processes with the mamillary processes remained in the meat side without injuring high quality meat near the mamillary processes.

By composing such that a plurality of pairs of halved carcasses hanging from hanger members at an equal spacing with their ankles hooked to the hanger are transferred horizontally, with the halved carcasses being suspended in a state the carcasses are adjacent each other in the transferring direction with the halved side faces of the carcasses facing each other, in such a manner that the halved carcasses are introduced into a backbone removing station provided with the backbone removing apparatus (es) intermittently at a takt time and brought to a stop to perform backbone removing in the station, not only the processing in the backbone removing station but processing before and after the backbone removing can be done continuously.

### BRIEF DESCRIPTION OF THE DRAWINGS

FIG.1 is an elevational view of an apparatus according to the invention applied to backbone removing of a pair of halved carcasses of a pig.
FIG.2 is a plan view of the apparatus of FIG.1.
FIG.3 is an elevational view to show carcass distance broadening process by inserting the carcass distance broadening devive.
FIG.4 is a plan view to show carcass distance broadening process(before broadened).
FIG.5 is a plan view to show the carcass distance broadening process(after broadened).
FIG.6 is an elevational view to show the state the carcass broadening device is retreated and the backbone removing unit is inserted.
FIG. 7 is a plan view to show the state the carcass broadening device is retreated and the backbone removing unit is inserted.
FIG. 8 is an elevational view to show carcass pushing process by forwarding the carcass pushers.
FIG.9 is a plan view to show carcass pushing process by forwarding the carcass pushers.
FIG.10 is an elevational view to show the state the carcass pushers are retreated and the carcass holders and arm part pushers are forwarded.
FIG.11 is a plan view to show the state the carcass pushers are retreated and the carcass holders and arm part pushers are forwarded.
FIG.12 is a plan view when cutting the backbone.
FIG.13A is an end elevation of the backbone holder plate having U-shaped recesses formed with the U-shaped recess forming members at an end part of the backbone holder plate.
FIG.13B is a plan view of the backbone holder plate having U-shaped recesses formed with the U-shaped recess forming members at an end part of the backbone holder plate.
FIG.13C is a perspective view of the of the backbone holder plate having U-shaped recesses formed with the U-shaped recess forming members at an end part of the backbone holder plate.

### DESCRIPTION OF SIMBOLS

B1: backbone
B3: spinous process(es)
B4: mamillary process(es)
P: halved carcass(es)
P1: ankle(es)
w: halved side face(s)
1: gambrel
2: trolley
4: trolley locking device
5: gambrel locking device
6: ankle locking device
10: backbone removing station
11: backbone removing unit
11a, 11b: backbone removing device
12a, 12b: spinous process guide
12c: incision made along spinous process
13a, 13b: backbone holder plate
14a, 14b: rotary round cutter
16: air cylinder
31: carcass holder
32: carcass pusher
33: arm part pusher
131: U-shaped recess forming member
131a: recess
134: relief cut

### BEST EMBODIMENT FOR IMPLEMENTING THE INVENTION

A preferred embodiment of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

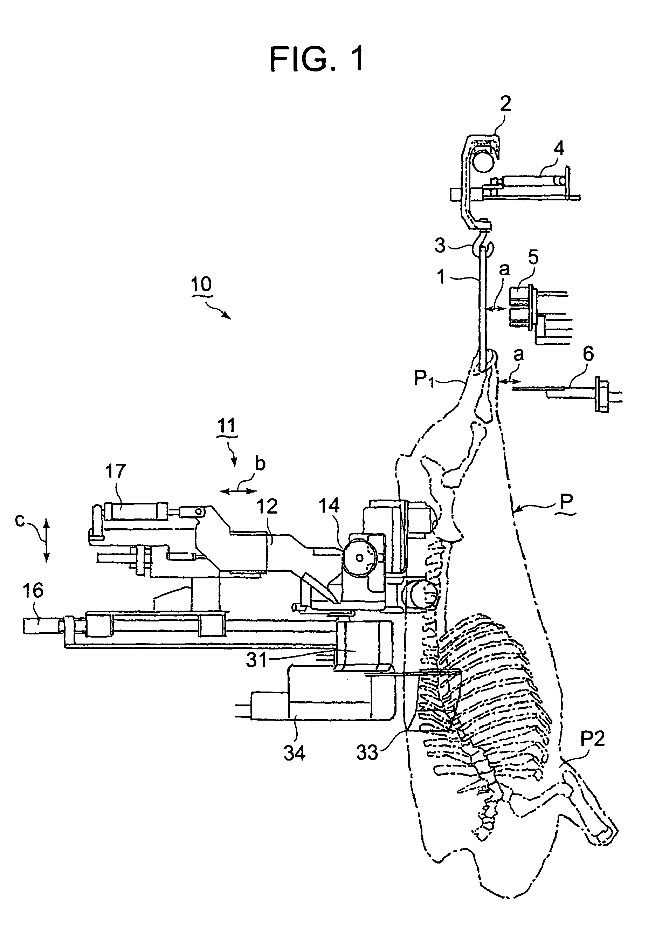

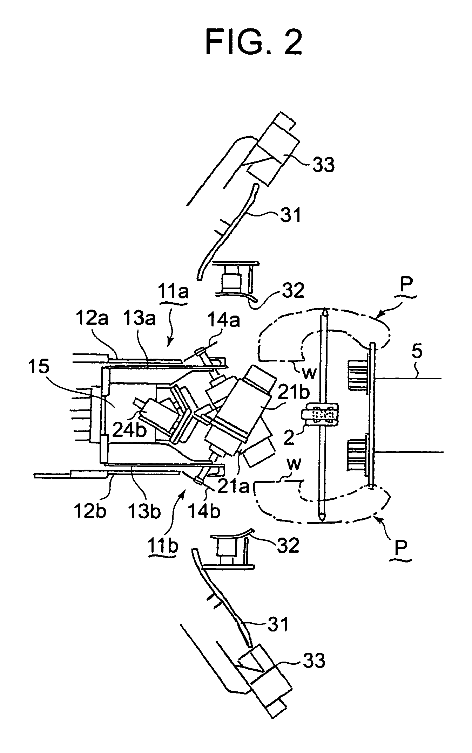

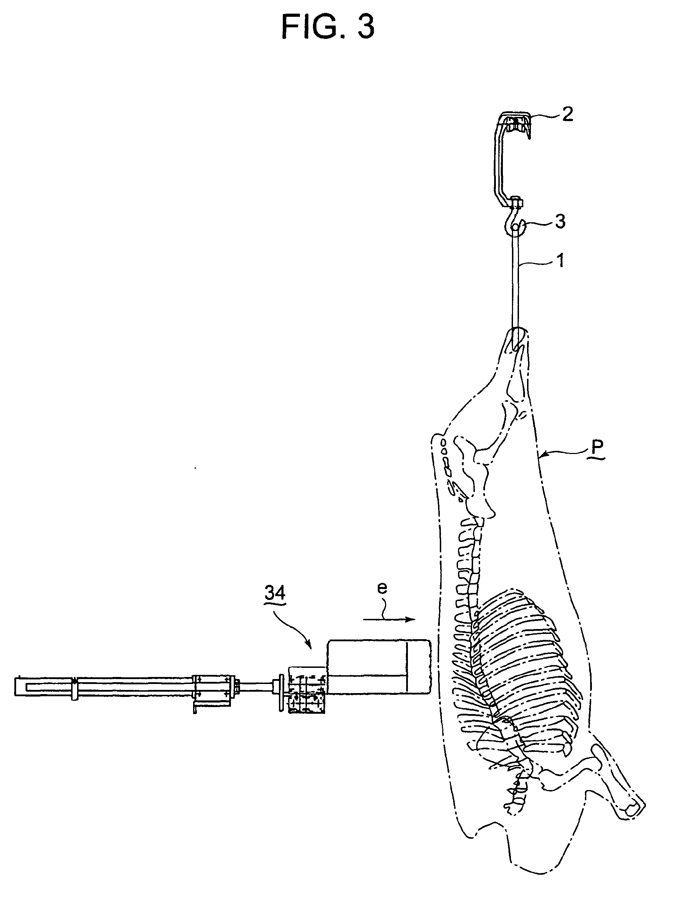

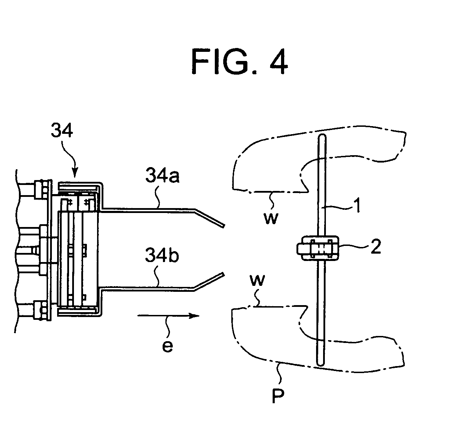

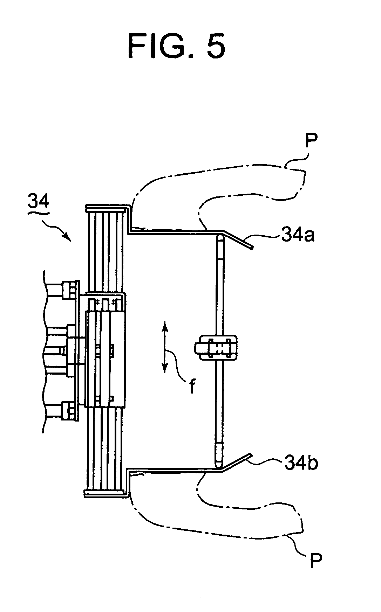

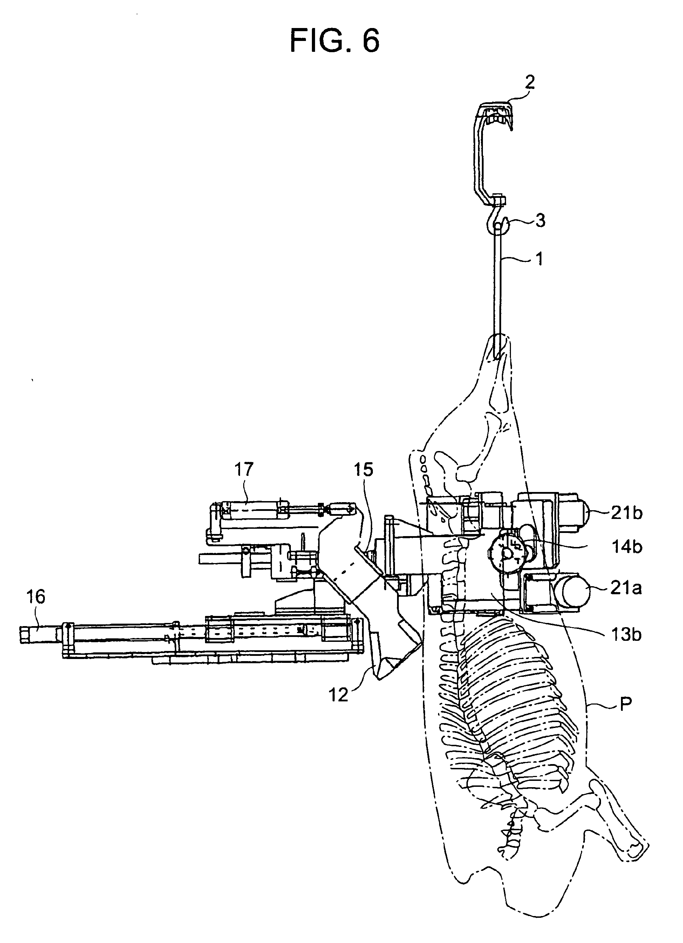

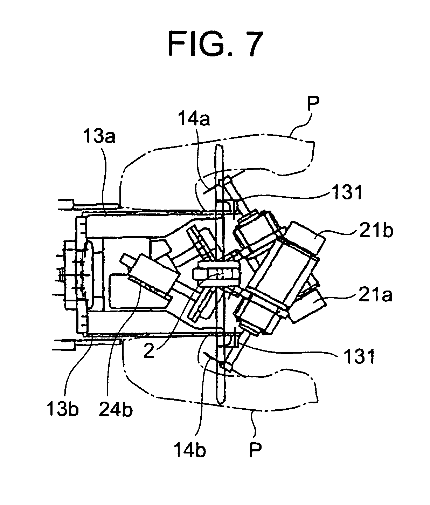

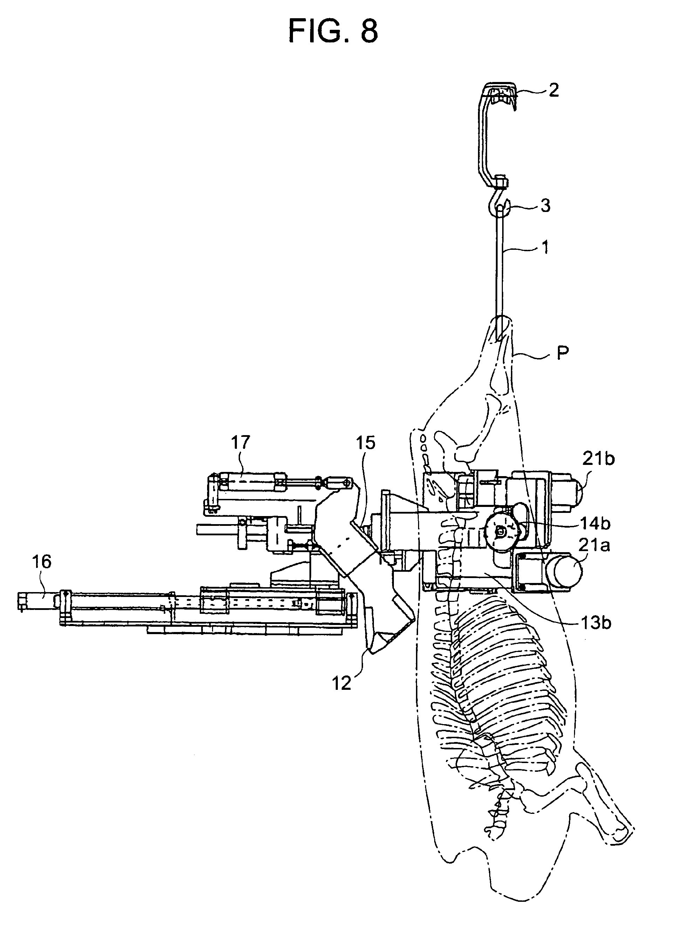

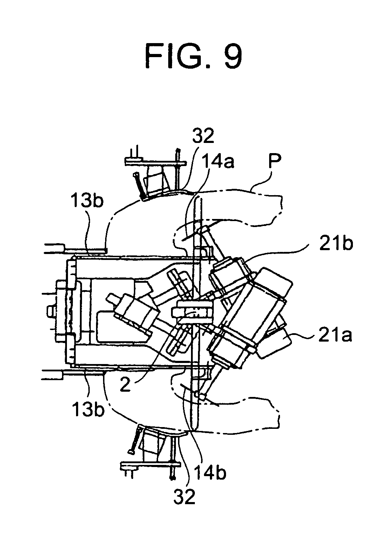

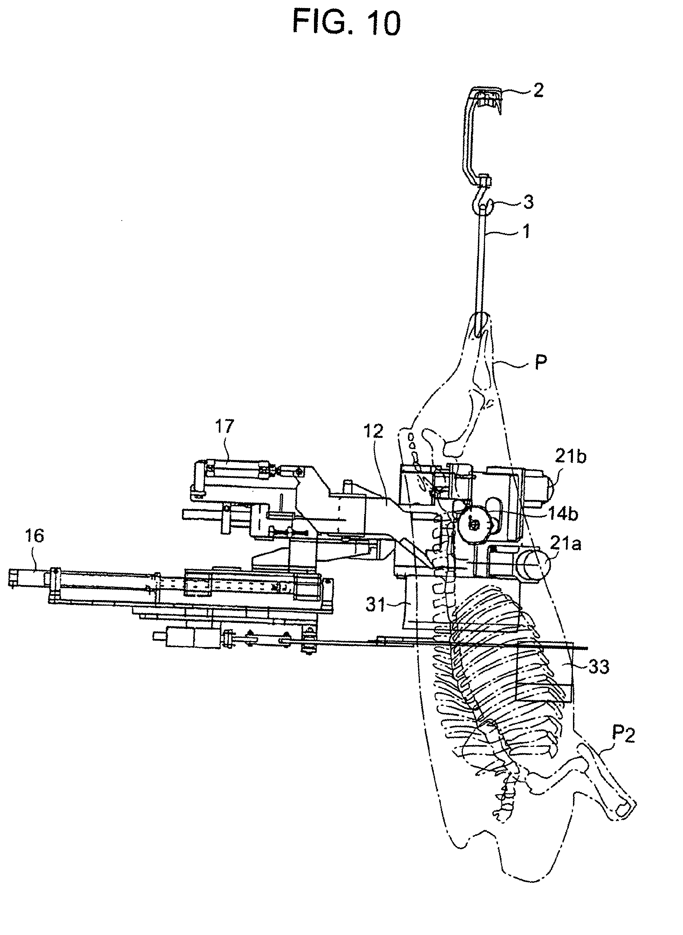

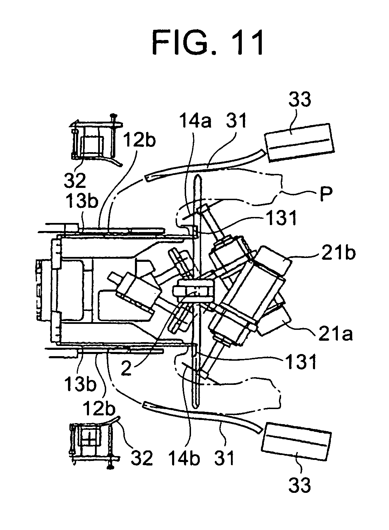

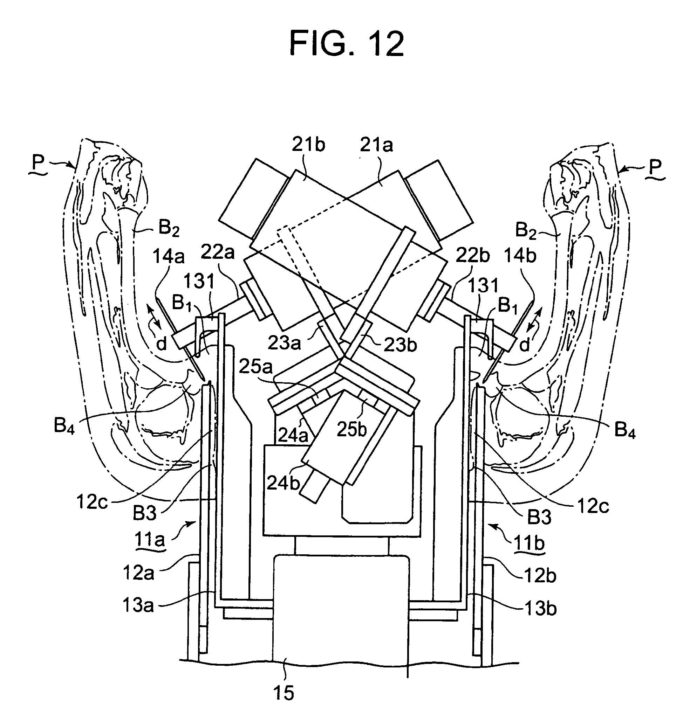

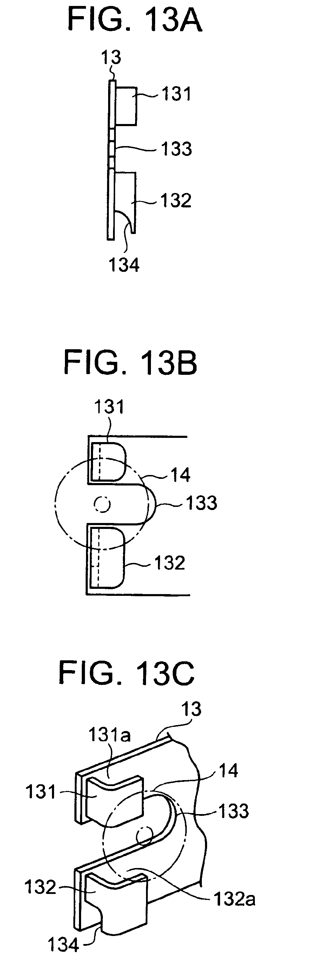

FIG.1 is an elevational view of an embodiment of the apparatus according to the invention applied to backbone removing of a pair of halved carcasses of a pig, FIG.2 is a plan view of the apparatus of FIG.1, FIG.3 is an elevational view to show carcass distance broadening process by inserting the carcass distance broadening device, FIG.4 is a plan view to show carcass distance broadening process (before broadened), FIG.5 is a plan view to show the carcass distance broadening process (after broadened), FIG.6 is an elevational view to show the state the carcass broadening device is retreated and the backbone removing unit is inserted, FIG.7 is a plan view to show the state the carcass broadening device is retreated and the backbone removing unit is inserted, FIG.8 is an elevational view to show carcass pushing process by forwarding the carcass pushers, FIG.9 is a plan view to show carcass pushing process by forwarding the carcass pushers, FIG.10 is an elevational view to show the state the carcass pushers are retreated and the carcass holders and arm part pushers are forwarded, FIG. 11 is a plan view to show the state the carcass pushers are retreated and the carcass holders and arm part pushers are forwarded, FIG.12 is a plan view when cutting the backbone, FIG.13A is an end elevation of the U-shaped recess forming member, FIG.13B is a plan view of the U-shaped recess forming member, and FIG.13C is a perspective view of the U-shaped recess forming member.

FIGS.1 and 2 are an elevational and plan view of the apparatus in a backbone removing station 10. Referring to FIGS.1 and 2, a left and right halved carcasses P of a pig are transferred by a trolley 2 in a state the ankle P1 of each of the halved carcasses P is hooked at the tendon thereof to a bifurcated gambrel 1 which is hooked to a hook 3 of the trolley 2.
The halved carcasses P have been already pretreated in preceding processes not shown in the drawings such as a process of making incision along the spinous processes to the meat adhering thereto and a process of removing fillet in a state the halved carcasses are hanging from the gambrel 1, and then transferred to the backbone removing process of the embodiment of the invention by the trolley 2.

In the backbone removing station 10 are provided a trolley locking device 4 for fixing the trolley 2 when it comes in position in the station 10, a gambrel locking device 5 for fixing the gambrel 1 to prevent swinging thereof, and an ankle locking device 6 for fixing the ankle P1. The gambrel locking device 5 and ankle locking device 6 are movable in directions shown by double arrows a.

The halved carcasses P are transferred to the backbone removing station 10 after they are pretreated in preceding process such that incision 12c is made to meat along the spinous processes to break up the connection of meat to the spinous processes and that fillet is removed. In the backbone removing station 10, a backbone removing unit 11 having a pair of backbone removing devices 11a and 11b is attached to a supporting board 15 which is provided movable in directions shown by a double arrow b by actuating an air cylinder 16, that is, the supporting board 15 can be advanced toward or retreated from the pair of halved carcasses P. The supporting board 15 can also be moved in vertical directions as shown by a double arrow c by means of an electric motor not shown in the drawings.

Each of the backbone removing divices 11a and 11b has respectively a spinous process guide 12a and 12b of platy shape, a rotary round cutter 14a and 14b, and a backbone holder plate 13a and 13b. The spinous process guides 12(12a and 12b) can be swung as can be seen in FIG.6 by actuating an air cylinder 17.

Next, working of round cutters 14 will be explained referring to FIG.12. In FIG.12, the round cutters 14 are attached to drive shafts 22 of drive motors 21 respectively. Respective drive motors 21 are connected via connecting flames 23 to pistons 25 of air cylinders 24 via connecting flames 23 attached to the supporting board 15. Therefore, the round cutters 14 are movable in directions shown by arrows d by actuating the air cylinders 24 respectively. The round cutters 14 are inclined by a certain angle respectively to the backbone holder plates 13.

As shown in Figs. 13A-C, the backbone holder plate 13 (13a and 13b) has a U-shaped recess forming members 131 and 132 to form U-shaped recesses 131a and 132a for engaging the backbone B1 of the halved carcass P. A recess 133 is formed in the backbone holder plate 13 between the U-shaped recess forming members 131 and 132 in order that the drive shaft 22 to which the round cutter 14 is attached can move penetrating the backbone holder plate 13. A part of the lower end of the U-shaped recess forming member 132 is cut out to form a relief cut 134.

As can be seen in FIGS. 1 and 2, in the backbone removing station 10 are provided in addition to the backbone removing unit 11 a pair of carcass holders 31 and a pair of carcass pushers 32 to push the halved carcasses P from their outside surfaces, a carcass distance broadening device 34 for broadening the distance between the right and left halved carcasses before the backbone removing unit 11 is inserted between the right and left halved carcasses, and a pair of arm part pushers 33 for pushing the right and left halved carcasses on their outside surfaces so that the arm parts P2 thereof approaches each other toward the center between the carcasses.

Operation procedure in the apparatus constructed as mentioned above will be explained referring to FIGS.3 to 13. A pair of right and left halved carcasses P undergone pretreatment of making incision to meat along the spinous processes and removing fillet is transferred into the backbone removing station 10. When the pair of carcasses P comes to the backbone removing station 10, the trolley locking device 4 is advanced forward and the trolley 2 is fixed by the trolley locking device 4, thereby stopping the transfer of the halved carcasses P. Then, the gambrel locking device 5 is advanced forward to fix the gambrel 1 to prevent swinging of the halved carcasses so that the carcasses are kept stationary.

Then, the carcass distance broadening device 34 is moved in the direction of an arrow e to advance between the halved carcasses along the halved side faces w of the carcasses, then both guides 34a and 34b of the carcass distance broadening device 34 are moved in directions f shown by a double arrow f in FIG.5 respectively to broaden distance between the right and left halved carcasses in order to ease insertion of the backbone removing unit 11 between the two halved carcasses.
Then, the backbone removing unit 11 is inserted between the two halved carcasses broaden in distance between them by the carcass distance broadening device 34.

Then, the piston of the air cylinder 17 is moved toward the carcasses to turn the spinous process guides 12(12a and 12b) in the clockwise direction as shown in FIG.6, both the guides 34a and 34b of the carcass distance broadening device 34 are moved inwardly to shorten distance between both the guides 34a and 34b, then the carcass distance broadening device 34 is retreated from the halved carcasses P. This state is shown in FIGS.6 and 7. In this state, the spinous process guides 12 are turned in the clockwise direction so that their front side parts departs from the backbone holder plates 13, so the halved side faces w of the halved carcasses P contact the backbone holder plates 13(13a and 13b) respectively.

The ankle locking device 6 is forwarded to fix the ankle P1 of each halved carcass in the state the halved side faces w of the halved carcasses P are contacting the backbone holder plates 13. Then, the pair of carcass pushers 32 is advanced to push the halved carcasses on both outside surfaces thereof. This state is shown in FIGS.8 and 9.

Then, the piston of the air cylinder 17 is moved in a direction opposite to the halved carcasses P to turn back the spinous process guides 12 in the anticlockwise direction so that each guide 12a and 12b inserts into the incision 12c made in the pretreatment process along the spinous processes B3 to the meat adhering thereto and the spinous processes of each halved carcass until the guide 12a and 12b abuts against the root of the mamillary processes B4 as shown in FIG. 12. Then, the backbone holder plates 13 are retreated toward the backbones B1 from the belly side of the halved carcass with the backbone holder plates 13 contacting the halved side faces w of the halved carcasses so that the backbones B1 are held by ends of the U-shaped recess forming members 131 and 132 of the backbone holder plates 13 as shown in FIG. 12. The backbones B1 are secured by the end parts of the U-shaped recess forming members 131 and 132 and the spinous process guides 12, and distortion of each of the backbones when the backbone removing unit 11 is moved down to cut each backbone along its longitudinal direction is prevented with the halved side faces w of the halved carcasses P being pushed to the backbone holder plates 13a and 13b respectively.

The pair of carcass holders 31 and the pair of arm part pushers 33, having surface area to push the halved carcasses wider than that of the pair of carcass pushers 32, are forwarded toward the halved carcasses P to push them on their outside surfaces, on the other hand the pair of carcass pushers 32 is retreated. This state is shown in FIGS.10 and 11. The pair of carcass pushers 32 is a device to secure the halved carcasses P when the pair of spinous process guides 12 is turned in the anticlockwise direction so that the right side end part thereof are inserted into the incisions 12c and the pair of backbone holder plates 13 is moved back toward the backbone side from the belly side to hold the backbone, on the other hand, the pair of carcass holders 31 and the pair of arm part pushers 33 are devices to secure the halved carcasses P by pushing the halved carcasses on their outside surfaces when cutting the backbone.

Therefore, the carcass pushers 32 are positioned outside the halved carcasses P at the same height position as that of incisions 12c where the spinous process guides 12 are inserted and each has relative small surface area to push the outer surface of the halved carcass, on the other hand, the carcass holders 31 are positioned outside the halved carcasses P at near the center part thereof and each has relative large surface area to push the outer surface of the halved carcass in order to secure the halved carcasses so that the backbones B1 do not disengage from the backbone holder plates 13. The arm part pushers 33 push the halved carcasses P near the arm parts P2 thereof to push arm parts P2 toward the center of the two halved carcasses P and thereby serve to prevent distortion of the halved carcasses when the backbone removing unit 11 is moved down to perform backbone cutting along the longitudinal direction thereof.

The round cutters 14 are rotated by the drive motors 21 and moved down by actuating the air cylinders 24 so that each of the round cutters 14 cuts each of the halved backbones. Each of the cutters 14 is inclined by a certain angle to each of the backbone holder plates 13 so that the cutter edge of each cutter comes to between the spinous process B3 and the mamillary process B4 when cutting the backbone B1 as can be seen in FIG.12. Then backbone cutting along the longitudinal direction of the backbone is performed by moving down the backbone removing unit 11.

Backbone cutting is performed by moving down the backbone removing unit 11 in a state the spinous processes are sandwiched between the spinous process guide 12 and backbone holder plate 13 and the backbone B1 is engaged by the U-shaped recess forming members 131 and 132 of the backbone holder plate 13. Therefore, the backbone B1 is cut with the rotating round cutter 14 while distortion of the backbone B1 is prevented because the backbone is held by the end of the U-shaped recesses forming members 131 and 132 while the backbone removing unit 11 moves down. As a part of the lower end of the U-shaped recess forming member 132 is cut out to form a relief cut 134, the backbone breaks into the relief cut 134, the bent portion of the backbone bending toward the belly side does not experience excessive bending force, the bending correction force is applied by the ends of the U-shaped recess forming members 131 and 132, and three dimensional twist of the backbone can be corrected.

When the backbone removing unit 11 has moved down to the lower end, the backbone holder plates 13 are moved in the direction opposite to the backbone B1 to allow the U-shaped recess forming members 131 and 132 disengage the backbone B1, and the spinous process guides 12 are turned in the clockwise direction so that the right side end parts thereof retreat from the incisions 12c. Then, after the backbone removing unit 11 is moved up, the carcass holders 31 and arm part pushers 33 are departed from the halved carcasses, and the round cutters 14 are moved away from the backbone cutting position.

Then, the ankle locking device 6 is released, the carcass distance broadening device 34 is advanced again to be inserted between the right and left halved carcasses and distance between the two halved carcasses is broadened. Then the spinous guide 12 is turned in the anticlockwise direction to recover its horizontal attitude, and the backbone removing unit 11 is retreated. Then the carcass distance broadening device 34 is retreated, the gambrel locking device 5 and trolley locking device 4 are released. Then the backbone removing unit 11 is moved up, the halved carcasses are removed, and a new pair of halved carcasses is introduced into the backbone removing station. In this way, backbone removing operation of a pair of right and left halved carcasses is performed automatically with the apparatus of the invention in the backbone removing station.

According to the apparatus of the embodiment, backbone removing process of a pair of halved carcasses can be automated without requiring manual processing. As backbone removing of right and left halved carcasses can be performed concurrently, processing efficiency is further increased.

According to the invention, two backbone removing devices 11a and 11b are inserted at the same time between a pair of right and left halved carcasses which are suspended in a state the halved side faces thereof face each other and distance between the halved side faces is broadened by the carcass distance broadening device 34, the backbone holder plates 13 are advanced from the backbone side to protrude toward the belly side of the halved carcasses and in this state the halved carcasses are pushed on their outside surfaces by the carcass pushers 32 to allow the halved side faces w of the carcasses to be pressed against the backbone holder plates 13 respectively thereby positioning the halved carcasses, then the backbone holder plates 13 once protruded toward the belly side are drawn back toward the backbone side to allow the U-shaped recess forming members 131 and 132 to engage the backbones of the halved carcasses, the spinous process guides 12 are inserted into the incisions 12c between meat and spinous processes made in a preceding process until the end of each guide 12 abuts the root of the mamillary process B4 thereby preventing swinging of each carcass and achieving secure positioning of each carcass.

Further, when performing cutting of the backbone, the halved carcasses are pushed with the carcass holders 31 on the outside surfaces thereof at near the center part thereof so that the backbones B1 do not depart from the backbone holder plates 13 and at the same time the arm parts P1 of the halved carcasses are pushed with the arm part pushers 33 so that distortion of the halved carcasses are prevented, so backbone cutting can be carried out smoothly.

The backbone removing unit 11 can be moved down smoothly while correcting the three dimensionally bent backbone to a linear state, because it is moved down to cut the backbone B1 with the round cutters 14 with the backbone B1 being held by the ends of the U-shaped recess forming members 131 and 132 and the bend region of the backbone B1 bending toward the belly side being allowed to pass through the relief cut 134 formed at the lower end part of the U-shaped recess forming member 132 without experiencing excessive bend correcting force. Therefore, the backbone B1 can be cut with high accuracy to remove the backbone together with spinous processes B3 with the mamillarly processes B4 remained in the meat side.

The round cutters 14 are inclined by a certain angle to the backbone holder plates 13 respectively from the rib bone side so that the cutting edge of each cutter comes to between the spinous process B3 and the mamillary process B4 when cutting the backbone B1, so backbone removing operation can be carried out without fear of injuring meat near the mamillary processes. Further, the halved carcasses are processed in each station continuously while being transferred in a pendent state.

### INDUSTRIAL APPLICABILITY

According to the invention, removing operation of the backbone of a pair of right and left halved carcasses produced by halving the carcass of a fat stock such as a pig, cow, or sheep along the backbone thereof can be automated thereby enabling substantial increase in processing efficiency of removing the backbone, and further the backbone removing can be performed without fear of injuring particularly meat of high commercial value.

## Claims

1. A method of removing halved backbones of a pair of halved carcasses produced by halving a carcass of a fat stock longitudinally through the center of the spinous processes of its backbone, comprising:
a step of positioning the pair of halved carcasses by inserting a backbone removing unit having a pair of backbone removing devices each comprising a platy spinous process guide, a backbone holder plate having U-shaped recess forming members at an end side thereof arranged along the longitudinal direction of the backbone, and a round cutter, between the pair of right and left halved carcasses hanging with their halved side faces facing each other so that each of the backbone holder plates contacts each of the halved side faces of the halved carcasses,
a step of fixing the pair of halved carcasses by drawing back the backbone holder plates toward the back side while contacting the halved side faces of the halved carcasses so that each of the backbones of the halved carcasses are engaged with each of the U-shaped recesses forming members of the backbone holder plates respectively and inserting each of the spinous process guides into each of incisions made in a preceding pretreatment process along the spinous processes to the meat adhering thereto until each spinous process guide abuts the root of each mamillary process, and
a step of cutting the backbones of the halved carcasses by moving down the backbone removing unit in a state each of the round cutters is inclined by a certain angle to each of the backbone holder plates from the rib bone side so that the cutting edge of each cutter rotated to cut the backbone comes between the spinous process and the mamillary process of each halved backbone when cutting the backbone, with the bending portion of each backbone bending toward the belly side being corrected with the U-shaped recess forming members as the backbone removing unit moves down.

2. A method according to claim 1, wherein each of the halved backbone does not experience excessive bend correcting force to correct an originally bended state of the backbone when the backbone removing unit moves down engaging the backbone in the U-shaped recess of the backbone holder plate to correct the bend as the backbone removing unit moves down by providing a relief cut formed at a lower end of a U-shaped recess forming member for forming the U-shaped recess.

3. A method according to claim 1, wherein said backbone removing unit is mounted to a supporting board and removing both of the halved backbones of the pair of halved carcasses is performed concurrently by allowing both of the backbone removing devices of the backbone removing unit to be operated simultaneously.

4. A method according to claim 1, wherein backbone removing is performed in a state the halved carcasses hanging with their halved side faces facing each other and having pretreated by making incision along the spinous processes to the meat adhering thereto and by removing fillet are introduced into a backbone removing station equipped with the backbone removing unit and brought to a stop in the station.

5. An apparatus for removing halved backbones of a pair of halved carcasses produced by halving a carcass of a fat stock longitudinally through the center of the spinous processes of the backbone, comprising:
a backbone removing unit having a pair of backbone removing devices each comprising a platy spinous process guide to be inserted into incision made in a preceding pretreatment process along the spinous processes to the meat adhering thereto until the spinous process guide abuts the root of each mamillary process, a backbone holder plate having U-shaped recess forming members at an end side thereof arranged along the longitudinal direction of the backbone, and a rotary round cutter which can be advanced and drawn back along a direction inclined by a certain angle to the backbone holder plate from the rib bone side so that its cutting edge comes between the spinous process and the mamillary process when it is advanced to cut the backbone along the longitudinal direction of the backbone;
a drive means which can advance to and draw back from the backbone removing unit between the halved carcasses and also can move the unit vertically in a state the unit is inserted between the halved carcasses; and
carcass holding members for pushing the halved carcasses from outside surfaces thereof to press each of the halved side faces of the carcasses to each of the backbone holder plates when the backbone removing unit is inserted between the halved carcasses, the carcass holding members being able to be advanced/retreated toward/from the halved carcasses;
whereby the apparatus is composed such that cutting of the backbones of the halved carcasses is carried out by moving down the backbone removing unit in a state each of the round cutters is inclined by a certain angle to each of the backbone holder plates from the rib bone side so that the cutting edge of each cutter rotated to cut the backbone comes between the spinous process and the mamillary process of each halved backbone when cutting the backbone, with each spinous process guide being inserted into in the incision until the spinous process guide abuts the root of each mamillary process, and with the bending portion of each backbone bending toward the belly side being corrected with the U-shaped recess forming members as the backbone removing unit moves down.

6. An apparatus according to claim 5, wherein a relief cut is formed at a lower end of a U-shaped recess forming member for forming the U-shaped recesses of each of the backbone holder plates so that the backbone does not experience excessive force to correct an originally bended state of the backbone when the backbone removing unit moves down engaging the halved backbone in the U-shaped recess of the backbone holder plate to correct the bend as the backbone removing unit moves down.

7. An apparatus according to claim 5, wherein a carcass distance broadening device which is advanced between the halved carcasses in the state of hanging and can broaden distance between the halved carcasses, the device being able to be advanced/retreated toward/from the halved carcasses.

8. An apparatus according to claim 5, wherein a transfer means for transferring the pair of halved carcasses in a hanging state with the halved side faces of the carcasses facing each other into the backbone removing station and a means for bringing the carcasses to a stop in the station are provided.

9. An apparatus according to claim 8, wherein said transfer means is composed such that a plurality of pairs of halved carcasses hanging from hanger members at an equal spacing with their ankles hooked to the hanger are transferred horizontally, with the halved carcasses of each pair being suspended in a state the carcasses are adjacent each other in the transferring direction with the halved side faces of the carcasses facing each other, in such a manner that the halved carcasses are introduced into a backbone removing station provided with the backbone removing apparatus (es) intermittently at a takt time and brought to a stop to perform backbone removing in the station.
